# EUROPEAN PATENT SPECIFICATION

(11) **EP 3 715 240 B1**
(45) Date of publication and mention of the grant of the patent: **04.01.2023**
(21) Application number: 18877655.3
(22) Date of filing: 03.09.2018
(51) Int. Cl.: B63H 23/36, B63H 5/10, F16C 17/02, F16C 33/74, F16J 15/18, F16J 15/324, F16N 7/22, F16N 7/38, F16N 11/08, F16N 13/22, F16N 31/00

(54) **SHAFT SEALING DEVICE FOR MARINE CONTRA-ROTATING PROPELLER DEVICE**
WELLENABDICHTUNGSVORRICHTUNG FÜR GEGENLÄUFIGE SCHIFFSSCHRAUBENVORRICHTUNG
DISPOSITIF D'ÉTANCHÉITÉ D'ARBRE POUR DISPOSITIF D'HÉLICE À CONTRE-ROTATION MARIN

(30) Priority: 20.11.2017 JP 2017222839
(43) Date of publication of application: 30.09.2020
(73) Proprietor: Japan Marine United Corporation, Yokohama-City, Kanagawa 220-0012 (JP); Wartsila Japan Ltd., Kobe-shi, Hyogo 650-0045 (JP)
(72) Inventor: SHIMIZU, Masahiro, Yokohama-City Kanagawa 220-0012 (JP); NISHIYAMA, Saiki, Yokohama-City Kanagawa 220-0012 (JP); MISAWA, Shingo, Yokohama-City Kanagawa 220-0012 (JP); NAKAIE, Masashi, Yokohama-City Kanagawa 220-0012 (JP); OKAMOTO, Mitsuhiro, Toyama-shi, Toyama 930-0916 (JP); TANEGUCHI, Shun, Toyama-shi, Toyama 930-0916 (JP)
(74) Representative: Dennemeyer & Associates S.A.
(86) International application number: PCT/JP2018/032566
(87) International publication number: WO 2019/097816

(56) References cited:
- JP-A- H0 411 597
- JP-A- H06 321 184
- JP-A- 2009 179 233
- JP-U- H0 431 367
- JP-U- H0 496 597
- JP-U- S6 144 397
- JP-U- H02 130 425
- KR-A- 20160 108 626
- SAITO Kenichi: "Optimization of Seal Devices for Contra-rotating Propellers", Journal of the JIME, vol. 52, no. 2, March 2017 (2017-03), pages 166-169, XP055683234, DOI: 10.5988/jime.52.166
- KIDO Yoshitaka: "Sealing device for podded propulsion system with contra-rotating propellers", Journal of the JIME, vol. 39, no. 9, 1 September 2004 (2004-09-01), pages 577-581, XP055683240, ISSN: 1884-3778, DOI: 10.5988/jime.39.577
- OTA Tetsuzo et al.: "World first contra-rotating propellers using VLCC Winning Marine Engineering of the Year", Journal of the Marine Engineering Society in Japan, vol. 30, no. 1, January 1995 (1995-01), pages 9-16, XP055609324, ISSN: 1884-4758

## Description

### Technical Field

The present invention relates to a shaft sealing device for a marine contra-rotating propeller device in which a front propeller and a rear propeller are disposed coaxially and respectively rotated in opposite directions each other .

### Background Art

A marine contra-rotating propeller device can be broadly divided into a biaxial drive system and a uniaxial drive system. In the biaxial drive system, a front propeller and a rear propeller are respectively driven by two concentric axes. In the uniaxial drive system, a reversing mechanism is provided between the front propeller and the rear propeller, and both propellers are driven by one axis.

The present invention relates to a contra-rotating propeller device of a biaxial drive system.

In the contra-rotating propeller device of the biaxial drive system, a reversing mechanism is provided in an engine room, and an outer shaft (hereinafter, "outer propeller shaft") and an inner shaft (hereinafter, "inner propeller shaft") as a double shaft are rotated in opposite directions each other.

For example, the outer propeller shaft is supported by a stern tube bearing provided at a rear part of a hull and attached with a front propeller at its rear end thereby to rotatably drive the front propeller. Further, the inner propeller shaft is supported by a contra-rotating bearing provided in the front propeller and attached with a rear propeller at its rear end thereby to rotatably drive the rear propeller in an opposite direction.

The stern tube bearing of the outer propeller shaft is provided with a stern-side stern tube seal (hereinafter a "stern tube seal") to prevent intrusion of the seawater. Similarly, the contra-rotating bearing of the inner propeller shaft is also provided with a stern-side contra-rotating seal (hereinafter a "contra-rotating seal") to prevent intrusion of the seawater.

The stern tube seal and the contra-rotating seal described above need to prevent the seawater from being mixed into lubricating oil and to prevent the lubricating oil from flowing out into the seawater.

In order to satisfy this demand, for example, Patent Literatures 1 and 2 have been disclosed.

A "marine contra-rotating propeller shaft sealing device" in Patent Literature 1 includes an outer shaft sleeve liner fixed to a front propeller and an inner shaft sleeve liner fixed to a rear propeller. Further, the marine contra-rotating propeller shaft sealing device includes an outer shaft annular air chamber fixed to a stern frame side so as to allow rotational sliding of the outer shaft sleeve liner along the outer periphery thereof, and an inner shaft annular air chamber fixed to a rear end of an outer shaft so as to allow rotational sliding of the inner shaft sleeve liner along the outer periphery thereof. Furthermore, the marine contra-rotating propeller shaft sealing device has a compressed air supply passage communicated from a compressed air source in a ship to the outer shaft annular air chamber through an air passage provided in the stern frame, and an inner shaft compressed air supply passage which supplies compressed air via the outer shaft annular air chamber to the inner shaft annular air chamber.

In a "stern tube seal device for a contra-rotating propeller ship" in Patent Literature 2, a drainage of a drainage chamber of an inner shaft rear seal device is introduced into a drainage chamber of an outer shaft rear seal device and discharged from the drainage chamber to an engine room through a drainage piping. Thus, it is possible to shorten a drainage discharge system and make natural drainage by gravity of the drainage in the drainage chamber practicable.

### Citation List

### Patent Literatures

PTL 1: Japanese Patent Publication Laid-open No. Sho 62-197497
PTL2: Japanese Patent Publication Laid-open No. Hei 7-251795
PTL 3: KR 2016 010 86 26 A

### Summary of Invention

### Technical Problem

In Patent Literature 1, a dry seal type shaft sealing device is used to guide compressed air thereto, thereby preventing intrusion of the seawater by the compressed air. In this case, there is a need to use a segment seal which uses no lubricating oil, and its structure becomes complicated and large, and becomes expensive.

In Patent Literature 2, since the drainage of the drainage chamber of the inner shaft rear seal device is discharged into the engine chamber through the drainage chamber of the outer shaft rear seal device, the drainages of the two drainage chambers are mixed and discharged. Therefore, it is not possible to determine an abnormal location of the seal from the discharged drainage.

Further, when the air supply deice is applied to the stern tube seal and the contra-rotating seal of the conventional contra-rotating propeller device, an air supply device and a drainage recovery device are respectively required to be provided in both of the stern tube seal and the contra-rotating seal.

Therefore, the two of the air supply device and the drainage recovery device are respectively required therefor, and the required installation space becomes excessive.

The present invention has been developed to solve the above-described problems. That is, a first object of the present invention is to provide a shaft sealing device for a marine contra-rotating propeller device which is capable of reducing the required number of air supply devices and determining an abnormal location of a seal from a discharged drainage.

Further, a second object of the present invention is to provide a shaft sealing device for a marine contra-rotating propeller device which is capable of reducing or preventing leakage of lubricating oil from a determined seal abnormal location.

### Solution to Problem

According to the present invention, there is provided a marine contra-rotating propeller device in which a front propeller and a rear propeller are disposed coaxially and respectively rotated in opposite directions each other,
in which the marine contra-rotating propeller device comprises a hollow outer propeller shaft which is attached with the front propeller at a rear end portion thereof, and is rotatably supported by a stern tube bearing about an axial center,
an inner propeller shaft which is attached with the rear propeller at a rear end portion thereof, and is rotatably supported by a stern side contra-rotating bearing about the axial center, and
a shaft sealing device,
in which the shaft sealing device includes a stern tube seal on the stern side which prevents seawater from entering the stern tube bearing,
a contra-rotating seal on the stern side which prevents the seawater from entering the stern side contra-rotating bearing,

characterized in that the shaft sealing device includes
   a single air supply device which supplies seal pressurized air to a front first chamber provided in the stern tube seal and the contra-rotating
seal via the front first chamber (53a),
   a stern tube drainage recovery device which independently recovers a front section drainage discharged from the stern tube seal on the stern side, and
   a contra-rotating drainage recovery device which recovers a rear section drainage discharged from the contra-rotating seal via a front third chamber provided in the stern tube seal.

### Advantageous Effects of Invention

According to the configuration of the present invention, since a single air supply device supplies seal pressurized air to a stern tube seal on a stern side and a contra-rotating seal on the stern side via the stern tube seal, the required number of air supply devices can be reduced.

Further, since a stern tube drainage recovery device independently recovers a front section drainage discharged from the stern tube seal on the stern side, and a contra-rotating drainage recovery device recovers a rear section drainage discharged from the contra-rotating seal on the stern side by separating the rear section drainage from the front section drainage, an abnormal location of the seal can be determined from the discharged drainage.

### Brief Description of Drawings

FIG. 1 is a first embodiment diagram of a shaft sealing device for a marine contra-rotating propeller device according to the present invention.
FIG. 2 is a partially enlarged diagram of the shaft sealing device in FIG 1.
FIG. 3 is an enlarged diagram of an E part in FIG.2.
FIG. 4 is a second embodiment diagram of a shaft sealing device for a marine contra-rotating propeller device according to the present invention.
FIG. 5 is a partially enlarged diagram of the shaft sealing device in FIG. 4.
FIG. 6 is a third embodiment diagram of a shaft sealing device for a marine contra-rotating propeller device according to the present invention.
FIG. 7 is a fourth embodiment diagram of a shaft sealing device for a marine contra-rotating propeller device according to the present invention.

### Description of Embodiments

Hereinafter, embodiments of the present invention will be described based on the drawings. Incidentally, parts common in the respective drawings are identified by the same reference numerals, and their dual description will be omitted.

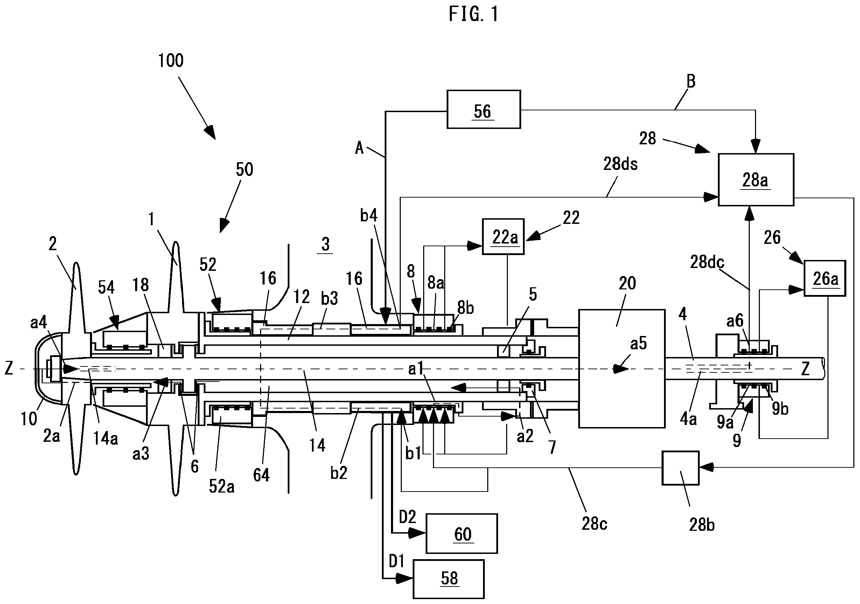

FIG. 1 is a first embodiment diagram of a shaft sealing device 50 for a marine contra-rotating propeller device 100 according to the present invention.

In this figure, the marine contra-rotating propeller device 100 includes a front propeller 1 and a rear propeller 2 disposed coaxially and respectively rotated in opposite directions each other.

The marine contra-rotating propeller device 100 includes an outer propeller shaft 12 and an inner propeller shaft 14.

The outer propeller shaft 12 is hollow, and is attached with the front propeller 1 at its rear end portion (left end in the figure) and rotatably supported by a stern tube bearing 16 about an axial center Z-Z.

The inner propeller shaft 14 is attached with the rear propeller 2 at its rear end portion (left end in the figure) and rotatably supported about the axial center Z-Z by a bow side contra-rotating bearing 5 and a stern side contra-rotating bearing 18 provided in the front propeller 1.

Front end portions (right end in the figure) of the outer propeller shaft 12 and the inner propeller shaft 14 are connected to a reversing device 20 so as to rotate the outer propeller shaft 12 and the inner propeller shaft 14 in opposite directions each other.

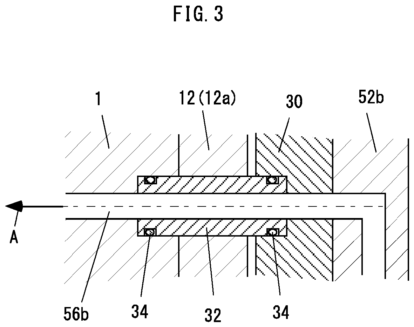

In FIG. 1, 3 is the stern of a hull, 4 is a drive shaft, 5 is a contra-rotating bearing on the bow side, 6 is a thrust bearing, 7 is a contra-rotating seal device on the stern side, 8 is a bow-side stern tube seal device-cum-outer shaft oil distributing device (hereinafter, an "outer shaft oil distributor"), 9 is an inner shaft oil distributor, and 10 is a propeller cap.

The stern tube bearing 16 is mounted in a horizontal through hole provided in the stern 3. Hereinafter, the stern tube bearing 16 is assumed to include stern tube bushes on the bow and stern sides, and their flanges.

The reversing device 20 is, for example, a planetary gear device or a parallel gear device, and rotates the outer propeller shaft 12 and the inner propeller shaft 14 in opposite directions each other by the rotation of the drive shaft 4. The drive shaft 4 is connected to a rotary driving device (e.g., an inboard engine not shown) provided on the right side in the figure.

The inner propeller shaft 14 is supported by the bow side contra-rotating bearing 5 and the stern side contra-rotating bearing 18 and rotates in the opposite direction to the front propeller 1 inside the outer propeller shaft 12.

The thrust bearing 6 transmits a thrust force acting on the front propeller 1 to the inner propeller shaft 14.

The bow side contra-rotating seal device 7 is provided on the inboard side of the outer propeller shaft 12 and the inner propeller shaft 14 and seals between them.

The outer shaft oil distributor 8 is fixed to the inside of a ship (the inboard side of the stern 3) and supplies lubricating oil to the outer propeller shaft 12 which rotates thereinside.

The outer shaft oil distributor 8 has four outer shaft seal members 8b forming three outer shaft annular chambers 8a divided in the axial direction in this example.

The inner shaft oil distributor 9 is fixed to the inside of the ship and has a function of discharging the lubricating oil from hollow holes 14a and 4a provided along the axial center Z-Z of the inner propeller shaft 14 and the drive shaft 4 and returning it to a lubricating oil tank 28a.

The inner shaft oil distributor 9 has three inner shaft seal members 9b which form two inner shaft annular chambers 9a divided in the axial direction in this example.

The marine contra-rotating propeller device 100 further includes two seal oil devices 22 and 26, and one lubricating oil supply device 28.

The seal oil device 22 supplies seal oil from a seal oil tank 22a to the two outer shaft annular chambers 8a on both sides in the axial direction of the outer shaft oil distributer 8.

The seal oil device 26 supplies seal oil from a seal oil tank 26a to the inner shaft annular chamber 9a on the inner side in the axial direction of the inner shaft oil distributor 9.

The lubricating oil supply device 28 has the lubricating oil tank 28a, a pump 28b, a lubricating oil supply line 28c, a contra-rotating bearing lubricating oil discharge line 28dc, and a stern tube bearing lubricating oil discharge line 28ds.

The lubricating oil tank 28a holds lubricating oil therein. In this example, the lubricating oil in the lubricating oil tank 28a is pressurized by pressurized air B.

The lubricating oil supply line 28c supplies the lubricating oil from the lubricating oil tank 28a to the pump 28b, and supplies the lubricating oil pressurized by the pump 28b to the outer shaft annular chamber 8a (a1 in the figure) in the center of the outer shaft oil distributor 8 and an inboard side end portion (b1 in the figure) of the stern tube bearing 16.

The lubricating oil supplied to the outer shaft annular chamber 8a (a1 in the figure) in the center of the outer shaft oil distributor 8 flows from a1 to a2 through a flow path provided in the outer propeller shaft 12 in the figure, and flows into an inter-axis flow path 64 between the outer propeller shaft 12 and the inner propeller shaft 14 on the stern side of the bow side contra-rotating seal device 7.

Further, this lubricating oil flows through a gap of the thrust bearing 6 into a3 in the figure and reaches the stern end of the inner propeller shaft 14 through an axial through hole 2a provided in the rear propeller 2.

With the above-described outer shaft oil distributor 8 and other configurations, the lubricating oil can be supplied to the inter-axis flow path 64 between the outer propeller shaft 12 and the inner propeller shaft 14 without providing a long lubricating oil flow path in the inner propeller shaft 14 and the outer propeller shaft 12.

In this example, the inner propeller shaft 14 and the drive shaft 4 respectively have hollow holes 14a and 4a provided along the shaft from the stern end of the inner propeller shaft 14. The lubricating oil passes through the hollow holes 14a and 4a and returns to the inner shaft annular chamber 9a on the outer side in the axial direction of the inner shaft oil distributor 9.

The inner shaft oil distributor 9 has a function of discharging the lubricating oil from the hollow hole 4a and returning it to the lubricating oil tank 28a.

That is, the contra-rotating bearing lubricating oil discharge line 28dc communicates the inner shaft annular chamber 9a on the outer side in the axial direction of the inner shaft oil distributor 9 and the lubricating oil tank 28a with each other, and returns the lubricating oil discharged from the inner shaft oil distributor 9 to the lubricating oil tank 28a. The lubricating oil for the contra-rotating bearing 5 is referred to as "contra-rotating bearing lubricating oil".

With the configuration described above, the contra-rotating bearing lubricating oil can be made to flow in the order of a1-a2-a3-a4-a5-a6, and hence the bow side contra-rotating bearing 5, the thrust bearing 6, and the stern side contra-rotating bearing 18 positioned in the inter-axis flow path 64 lying in the middle thereof can be lubricated.

In FIG. 1, the shaft sealing device 50 has a lubricating oil flow path which supplies the lubricating oil to the stern tube bearing 16. The lubricating oil of the stern tube bearing 16 is referred to as "stern tube bearing lubricating oil".

That is, in FIG. 1, the lubricating oil supplied to the stern tube (b1 in the figure) is supplied to the stern side of the stern tube bearing 16 on the stern side through b1 to b2, and further lubricates the stern tube bearing via b3 in the figure, followed by being discharged from an inboard side end (b4 in the figure) to the stern tube bearing lubricating oil discharge line 28ds.

With the configuration described above, the stern tube bearing lubricating oil can be made to flow in the order of b1-b2-b3-b4, and the stern tube bearing 16 located in the middle thereof can be lubricated.

In FIG. 1, the shaft sealing device 50 according to the present invention further includes a stern tube seal 52 on the stern side, a contra-rotating seal 54 on the stern side, a single air supply device 56, a stern tube drainage recovery device 58, and a contra-rotating drainage recovery device 60.

The stern tube seal 52 on the stern side prevents seawater from entering the stern tube bearing 16.

The contra-rotating seal 54 on the stern side prevents seawater from entering the stern side contra-rotating bearing 18.

The single air supply device 56 supplies seal pressurized air A to the stern tube seal 52 on the stern side and the contra-rotating seal 54 on the stern side via the stern tube seal 52 on the stern side. Further, the lubricating oil tank 28a is pressurized with the lubricating oil pressurized air B.

Hereinafter, except where necessary, the seal pressurized air A is abbreviated as "seal air A", and the lubricating oil pressurized air B is abbreviated as "pressurized air B".

The stern tube drainage recovery device 58 independently recovers a front section drainage D1 discharged from the stern tube seal 52 on the stern side.

The contra-rotating drainage recovery device 60 recovers a rear section drainage D2 discharged from the contra-rotating seal 54 on the stern side by separating it from the front section drainage D1.

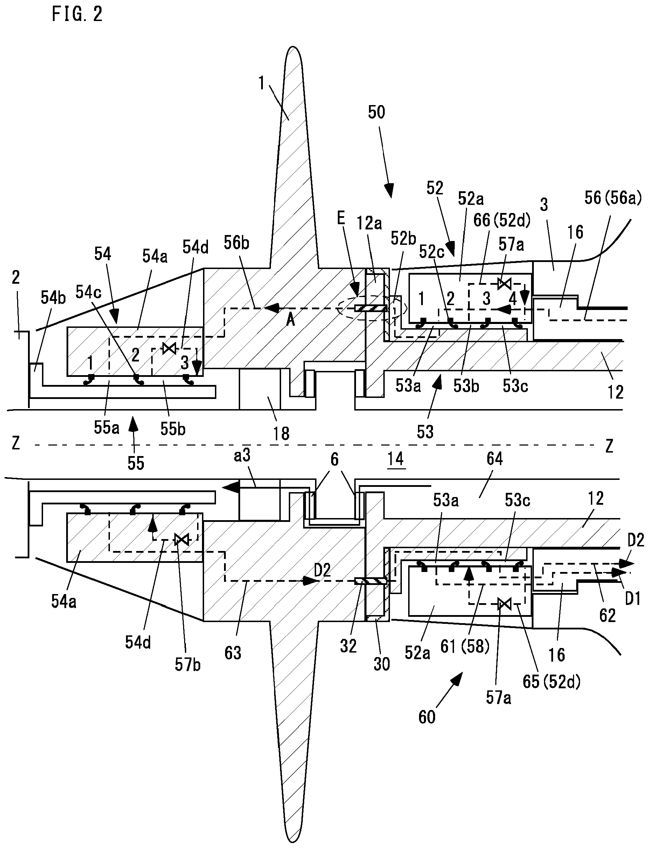

FIG. 2 is a partially enlarged diagram of the shaft sealing device 50 in FIG. 1.

In FIG. 2, the stern tube seal 52 on the stern side has a front seal casing 52a, a front seal liner 52b, and a plurality of front seal members 52c.

The front seal member 52c is preferably a lip seal.

The front seal casing 52a is fixed to the stern tube bearing 16 (or stern 3) and has a circular opening centered on the axial center Z-Z.

In this example, the front seal liner 52b is fixed to the front propeller 1 via the inner end (flange 12a) of the outer propeller shaft 12 and positioned inside the front seal casing 52a.

A plurality (four in this example) of the front seal members 52c are positioned so as to be axially spaced between the front seal casing 52a and the front seal liner 52b, and seal therebetween to form three or more (three in this example) front annular chambers 53 divided in the axial direction.

In this example, the three front annular chambers 53 are hereinafter referred to as a front first chamber 53a, a front second chamber 53b, and a front third chamber 53c from the side in contact with seawater (the left side in the figure).

The air supply device 56 (refer to FIG. 1) has a front air flow path 56a which introduces the seal air A into the front first chamber 53a. In FIG. 2, the front air flow path 56a is provided inside the stern tube bearing 16 and the front seal casing 52a.

In FIG. 2, the lubricating oil is introduced into the front second chamber 53b.

That is, in FIG. 2, the front seal casing 52a has a front seal casing perforation 52d which communicates a gap between the stern tube bearing 16 and the front seal liner 52b and the front second chamber 53b with each other. Thereby, the lubricating oil flowing through the gap between the stern tube bearing 16 and the front seal liner 52b can be introduced into the front second chamber 53b.

In FIG. 2, the shaft sealing device 50 further includes a second lubricating oil flow path 66 which discharges the lubricating oil from the front second chamber 53b to the stern side of the stern tube bearing 16 through the front seal casing 52a.

The second lubricating oil flow path 66 discharges the lubricating oil supplied to the front second chamber 53b into the ship via the stern tube bearing 16.

With this configuration, the lubricating oil can be discharged from the front second chamber 53b into the ship without providing the long lubricating oil flow path in the outer propeller shaft 12.

In FIG. 2, the stern tube drainage recovery device 58 has a first drainage flow path 61 which discharges the front section drainage D1 of the front first chamber 53a into the ship.

That is, the stern tube drainage recovery device 58 is in communication with the front first chamber 53a via the stern tube bearing 16 and the first drainage flow path 61 provided inside the front seal casing 52a. The first drainage flow path 61 is provided separately from a first lubricating oil flow path 65 (FIG. 1).

With the configuration of the stern tube seal 52, the air supply device 56, and the stern tube drainage recovery device 58 on the stern side described above, the seal air A is supplied to the front first chamber 53a, and the front section drainage D1 can be recovered independently from the front first chamber 53a.

The pressure of the seal air A in the front first chamber 53a is adjusted to be higher than the pressure of seawater corresponding to the depth of water. Thus, even when there is a leak in the front seal member 52c in contact with the seawater, the seal air A flows to the seawater side, and the seawater does not flow into the pressurized air side.

Further, the pressure of the lubricating oil supplied to the front second chamber 53b is adjusted to be higher than the pressure of the seal air A in the front first chamber 53a. Thus, even when there is a leak in the front seal member 52c in contact with the lubricating oil, the lubricating oil flows to the air side, and the seal air A does not flow into the lubricating oil.

Thus, with the configuration described above, it is possible to prevent the seawater from being mixed into the lubricating oil and prevent the lubricating oil from flowing out into the seawater in the stern tube seal 52 on the stern side.

Further, when the front seal member 52c in contact with the seawater is damaged, the pressure of the seal air A is reduced, so that the seawater flows into the front first chamber 53a, and the seawater contained in the front section drainage D1 increases.

Similarly, when the front seal member 52c in contact with the lubricating oil is damaged, the lubricating oil flows into the air side, and the lubricating oil contained in the front section drainage D1 increases.

Therefore, with the configuration described above, it is possible to determine which front seal member 52c constituting the front first chamber 53a has been damaged, from the ratio between the amounts of the seawater and lubricating oil contained in the front section drainage D1.

In FIG. 2, the contra-rotating seal 54 on the stern side includes a rear seal casing 54a, a rear seal liner 54b, and a plurality of rear seal members 54c.

The rear seal casing 54a is fixed to the front propeller 1 and has a circular opening centered on the axial center Z-Z.

The rear seal liner 54b is fixed to the rear propeller 2 and located inside the rear seal casing 54a.

The plurality (three in this example) of rear seal members 54c are positioned so as to be axially spaced between the rear seal casing 54a and the rear seal liner 54b and seals therebetween to form two or more (two in this example) rear annular chambers 55 divided in the axial direction.

The two rear annular chambers 55 are hereinafter referred to as a rear first chamber 55a and a rear second chamber 55b from the side in contact with the seawater (the left side in the figure).

The air supply device 56 has a rear air flow path 56b which introduces the seal air A from the front first chamber 53a to the rear first chamber 55a. In FIG. 2, the rear air flow path 56b is provided inside the front seal liner 52b, the front propeller 1, and the rear seal casing 54a.

The lubricating oil is introduced into the rear second chamber 55b.

That is, in FIG. 2, the rear seal casing 54a has a rear seal casing perforation 54d which communicates a gap between the outer propeller shaft 12 and the inner propeller shaft 14 and the rear second chamber 55b with each other. Thus, it is possible to introduce the lubricating oil flowing through the gap between the outer propeller shaft 12 and the inner propeller shaft 14 into the rear second chamber 55b.

In FIG. 2, the contra-rotating drainage recovery device 60 has a second drainage flow path 62 which discharges the rear section drainage D2 of the front third chamber 53c into the ship.

The front third chamber 53c is separated from the front first chamber 53a by the two front seal members 52c.

The contra-rotating drainage recovery device 60 further has a third drainage flow path 63 which discharges the rear section drainage D2 of the rear first chamber 55a to the front third chamber 53c. The third drainage flow path 63 communicates the rear first chamber 55a and the front third chamber 53c with each other.

The seal air A can be supplied to the rear first chamber 55a through the front first chamber 53a by the stern side contra-rotating seal 54, the air supply device 56, and the stern tube drainage recovery device 58 described above. Further, with this configuration, the rear section drainage D2 can be separated from the front section drainage D1 and recovered into the ship through the front third chamber 53c from the rear first chamber 55a.

The pressure of the seal air A in the rear first chamber 55a is adjusted to be higher than the pressure of seawater corresponding to the depth of water. Thus, even when there is a leak in the rear seal member 54c in contact with the seawater, the seal air A flows to the seawater side, and the seawater does not flow into the pressurized air side.

Further, the pressure of the lubricating oil supplied to the rear second chamber 55b is adjusted to be higher than the pressure of the seal air A in the rear first chamber 55a. Thus, even when there is a leak in the rear seal member 54c in contact with the lubricating oil, the lubricating oil flows to the air side, and the seal air A does not flow into the lubricating oil.

Thus, with the configuration described above, it is possible to prevent the seawater from being mixed into the lubricating oil and prevent the lubricating oil from flowing out into the seawater in the contra-rotating seal 54 on the stern side.

Further, when the rear seal member 54c in contact with the seawater is damaged, the pressure of the seal air A is reduced, so that the seawater flows into the rear first chamber 55a, and the seawater contained in the rear section drainage D2 increases.

Similarly, when the rear seal member 54c in contact with the lubricating oil is damaged, the lubricating oil flows into the air side, and the lubricating oil contained in the rear section drainage D2 increases.

Therefore, with the configuration described above, it is possible to determine which rear seal member 54c constituting the rear first chamber 55a has been damaged, from the ratio between the amounts of the seawater and lubricating oil contained in the rear section drainage D2.

As described above, in the present invention, the stern tube seal 52 on the stern side is constituted of the four front seal members 52c. Further, the four front seal casings 52a are fixed to the stern tube bearing 16 (the flange of the stern tube bush, or the stern tube) or the stern 3, and the front seal liner 52b is fixed to the front propeller 1.

Seal lips of the front seal members 52c are assumed to be Nos. 1, 2, 3, and 4 from the side where they come into contact with the seawater. The front first chamber 53a between Nos. 1 and 2 is assumed to be a seal air A and stern tube drainage chamber. The front second chamber 53b between Nos. 2 and 3 is assumed to be a cooling lubricating oil chamber. The front third chamber 53c between Nos. 3 and 4 is assumed to be a drainage chamber of the contra-rotating seal 54 on the stern side.

The front first chamber 53a communicates with two systems of pipings in the stern tube. One of them is connected to the air supply device 56 via the front air flow path 56a, and the other thereof is connected to the stern tube drainage recovery device 58 via the first drainage flow path 61. An air supply hole which guides the seal air A to the contra-rotating seal 54 on the stern side is perforated in the front seal liner 52b of the front first chamber 53a.

The front second chamber 53b communicates with the lubricating oil of the stern tube bearing 16 via the front seal casing perforation 52d. Although it is preferable to provide a forced lubrication system which applies a rotational flow of the shaft for actively circulating the lubricating oil, it may be omitted.

Further, it is preferable to provide a plug (B plug 57a) for blocking communication with the stern tube lubricating oil where the front seal members 52c of Nos. 2 and 3 constituting the front second chamber 53b are damaged.

The B plug 57a is a plug for blocking the flow path (front seal casing perforation 52d) and stopping leakage of the lubricating oil when the function of the front seal member 52c is lost. The B plug 57a can be opened and closed from the outer periphery of the seal casing.

By completely closing the B plug 57a with this configuration, leakage of the lubricating oil from the front second chamber 53b can be reduced or prevented.

The front third chamber 53c between Nos. 3 and 4 communicates with the piping in the stern tube, the perforation of the stern tube bush flange, and the perforation of the front seal casing 52a, and is connected to the contra-rotating drainage recovery device 60 inside the ship. The front seal liner 52b of the front third chamber 53c is perforated with a seal drainage hole which leads the rear section drainage D2 from the stern side contra-rotating seal 54.

Also, in the present invention, the stern side contra-rotating seal 54 is constituted by the three rear seal members 54c. Further, the rear seal casing 54a is fixed to the front propeller 1 or the bearing housing of the stern side contra-rotating bearing 18 attached to the front propeller 1, and the rear seal liner 54b is fixed to the rear propeller 2.

Seal lips of the rear seal members 54c are assumed to be Nos. 1, 2, and 3 from the outboard side (in contact with the seawater). The rear first chamber 55a between Nos. 1 and 2 is assumed to be a seal air A and contra-rotating seal drainage chamber, and the rear second chamber 55b between Nos. 2 and 3 is assumed to be a cooling-cum-No. 3 seal standby lubricating oil chamber.

The rear first chamber 55a communicates with two systems of flow paths. One of them is connected to the common air supply device 56 via the rear air flow path 56b, the front first chamber 53a, and the front air flow path 56a. The other thereof is connected to the contra-rotating drainage recovery device 60 via the third drainage flow path 63, the front third chamber 53c, and the second drainage flow path 62.

The rear second chamber 55b communicates with the lubricating oil of the stern side contra-rotating bearing 18 through the rear seal casing perforation 54d. In order to actively circulate the lubricating oil, the above-described forced lubrication system which applies the rotational flow of the shaft is preferably provided, but may be omitted. Also, it is preferable to provide a plug (B plug 57b) for blocking communication with the lubricating oil of the stern side contra-rotating bearing 18 when the seal lip of No. 2 is damaged.

With this configuration, the leakage of the lubricating oil from the rear second chamber 55b can be reduced or prevented by fully closing the B plug 57b.

FIG. 3 is an enlarged view of an E part of FIG. 2.

As shown in this figure, it is preferable that a portion in contact with the seal air A, the front section drainage D1, and the rear section drainage D2 is made of a material which is corrosion-resistant to the seawater.

In FIG. 3, 30 is a flange cover, 32 is an adapter piping, and 34 is a seal member.

The flange cover 30 is liquid-tightly attached to the outer peripheral surface and the right end surface of the flange 12a so that the outer peripheral surface of the flange 12a of the outer propeller shaft 12 and the right end surface thereof in the drawing do not contact the seawater.

The adapter piping 32 is a hollow cylindrical member which penetrates through the flange 12a of the outer propeller shaft 12. Both ends thereof are located in a perforation of the front propeller 1 and a perforation of the flange cover 30.

The seal member 34 is, for example, an O-ring or a gasket, and seals between the adapter piping 32 and the front propeller 1 and the flange cover 30 in a liquid-tight manner.

The adapter piping 32 disposed between the perforation of the flange cover 30 and the perforation of the front propeller 1 is preferably a copper alloy or stainless steel material that is corrosion-resistant to the seawater. Also, it is preferable to penetrate the perforation of the flange 12a of the outer propeller shaft 12 and prevent the seal air A, the front section drainage D1, and the rear section drainage D2 from directly contacting the outer propeller shaft 12. Further, the seal member 34 is preferably used for sealing so as not to contact the gap between the boss of the front propeller 1 and the flange cover 30.

According to the first embodiment of the present invention described above, since the seal air A is supplied to the stern tube seal 52 on the stern side and the contra-rotating seal 54 on the stern side therethrough by the single air supply device 56, the required number of air supply devices 56 can be reduced.

Further, the stern tube drainage recovery device 58 independently recovers the front section drainage D1 discharged from the stern tube seal 52 on the stern side, and the contra-rotating drainage recovery device 60 recovers the rear section drainage D2 discharged from the contra-rotating seal 54 on the stern side by separating it from the front section drainage D1. With this configuration, it is possible to determine an abnormal location of the seal (the front seal member 52c, the rear seal member 54c) from the discharged drainages D1 and D2.

Further, the arrangement space can be reduced by sharing the air supply device 56 while damage locations at the occurrence of seal damage remain isolatable by installing the drainage recovery devices 58 and 60 in the stern side stern tube seal 52 and the stern side contra-rotating seal 54 respectively.

Further, air seal associated piping can be reduced. In particular, the installation of the long piping to the rotator is eliminated, and the structure can be simplified, thus making it possible to reduce costs.

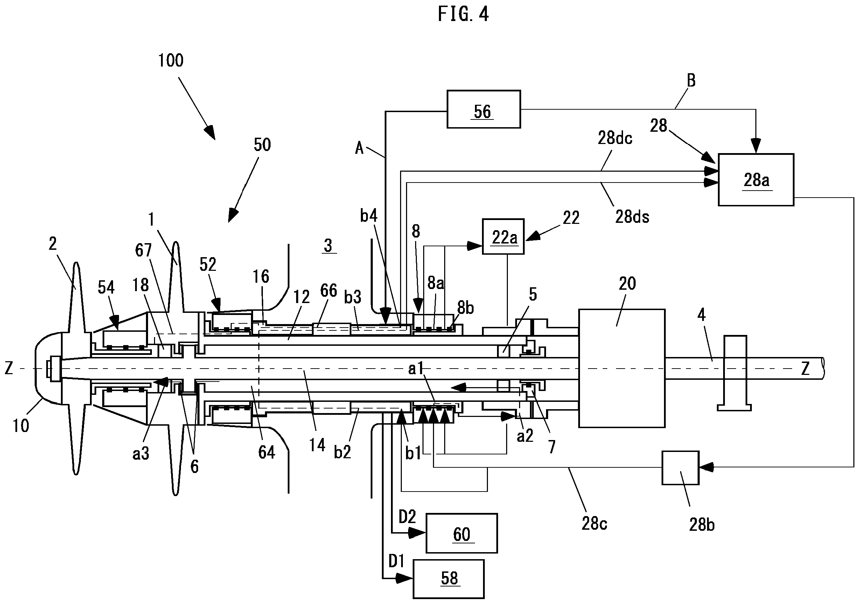

FIG. 4 is a second embodiment diagram of the shaft sealing device 50 of the marine contra-rotating propeller device 100 according to the present invention.

In this example, the axial through hole 2a, the hollow hole 4a, the inner shaft oil distributor 9, and the seal oil device 26 in the first embodiment (FIG. 1) are omitted.

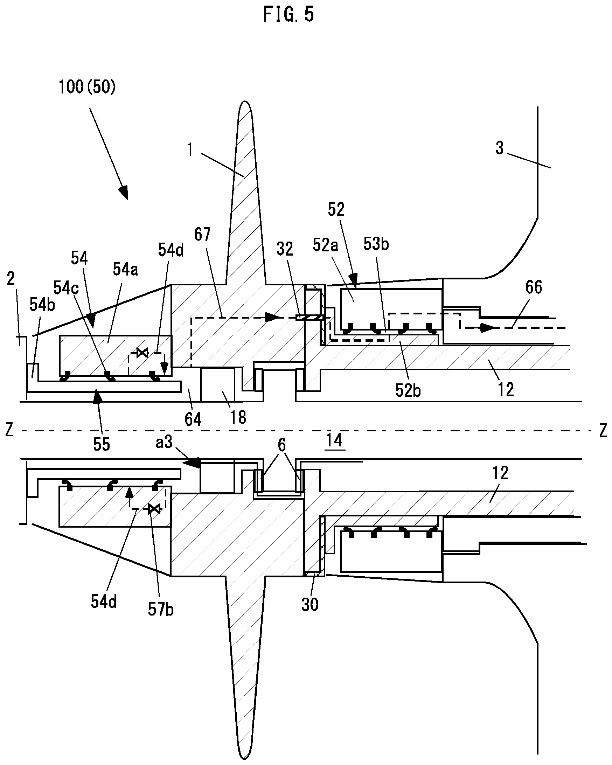

FIG. 5 is a partially enlarged diagram of the shaft sealing device 50 of FIG. 4.

In FIG. 5, the shaft sealing device 50 has a third lubricating oil flow path 67 which discharges lubricating oil from the stern-side inter-axis flow path 64 of the stern side contra-rotating bearing 18 to the front second chamber 53b.

That is, the third lubricating oil flow path 67 communicates the inter-axis flow path 64 and the front second chamber 53b with each other. Further, the third lubricating oil flow path 67 is connected to the second lubricating oil flow path 66 which discharges the lubricating oil into the ship via the front seal casing 52a from the front second chamber 53b.

In this case, the front second chamber 53b is not provided with the forced lubrication method applying the rotational flow of the shaft and the B plug.

With this configuration, there is provided an oil flow path from the inter-axis flow path 64 on the stern side of the stern side contra-rotating bearing 18 inside the front propeller 1 to the second lubricating oil flow path 66 via the third lubricating oil flow path 67. The third lubricating oil flow path 67 includes the bearing housing, the front propeller 1, the adapter piping 32, and the flange cover 30.

In this example, the material of the adapter piping 32 may be an iron-based material. Further, fluid (lubricating oil) may be structurally in contact with the outer propeller shaft 12. Others are the same as in the first embodiment.

According to the above-described second embodiment, the hollow hole 14a of the inner propeller shaft 14a can be omitted to provide a solid shaft. Further, the hollow hole 4a of the drive shaft 4, the inner shaft oil distributor 9, and the seal oil device 26 can also be omitted.

Furthermore, the axial through hole 2a of the rear propeller 2 can be omitted, and the rear propeller 2 may be the same structure as a normally fixed pitch propeller. Moreover, the propeller cap 10 also becomes a single structure similar to the normally fixed pitch propeller from the double structure, and becomes advantageous in cost.

Other effects are the same as those of the first embodiment.

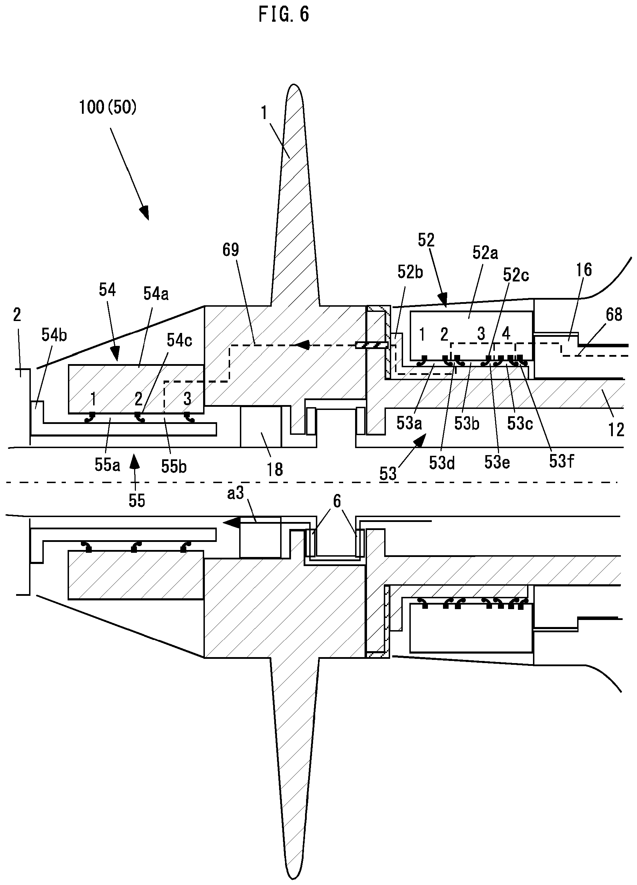

FIG. 6 is a third embodiment diagram of the shaft sealing device 50 of the marine contra-rotating propeller device 100 according to the present invention.

In this example, three front seal members 52c are provided as standby seals in the middle and both sides of the front second chamber 53b and the front third chamber 53c in the axial direction to form front standby seal chambers 53d, 53e, and 53f.

Further, the shaft sealing device 50 has a fourth lubricating oil flow path 68 which supplies lubricating oil from inside of the ship to the three front standby seal chambers 53d, 53e, and 53f. Moreover, a fifth lubricating oil flow path 69 which communicates the rear second chamber 55b and the front standby seal chamber (53d in this figure) with each other is provided.

The front standby seal chambers 53d, 53e, and 53f are connected to an inboard standby seal lubricating oil supply system (not shown) via the independent fourth lubricating oil flow path 68. Incidentally, in this case, the rear second chamber 55b is not provided with the forced lubrication method applying the rotational flow of the shaft and the B plug described above.

According to the third embodiment described above, the supply of the standby seal lubricating oil from inside of the ship through the fourth lubricating oil flow path 68 and the fifth lubricating oil flow path 69 is stopped, thereby making it possible to reduce or prevent the leakage of the lubricating oil in the front second chamber 53b, the front third chamber 53c, and the rear second chamber 55b.

That is, when the damage of the rear seal member 54c between 55a and 55b occurs, or when the damage of the front seal member 52c between 53a and 53d, 53e and 53c, or 53c and 53f occurs, the supply of the standby seal lubricating oil is stopped, so that the standby seal of the rear seal member 54c between 55b and 18, or the front seal member 52c between 53d and 53b, 53b and 53e, or 53f and 16 can be operated. The function/performance can also be the same as the conventional seal.

Other effects are similar to those of the first and second embodiments.

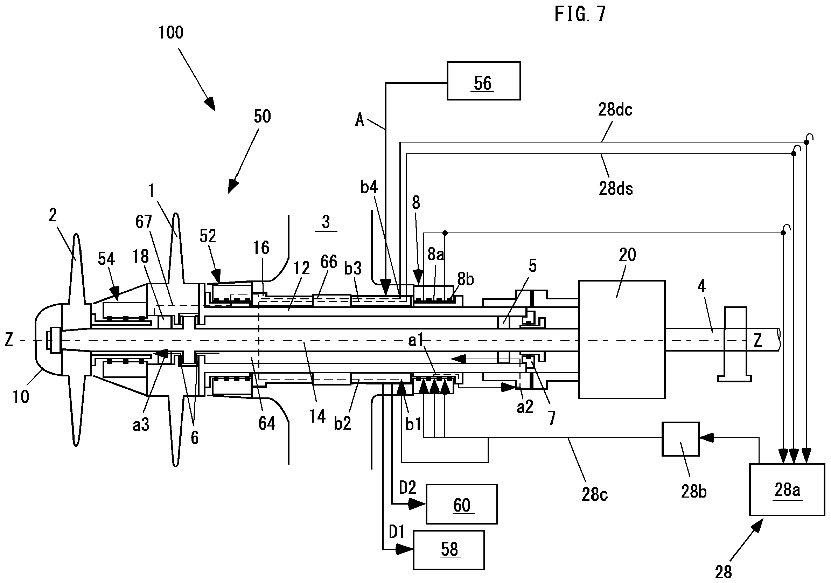

FIG. 7 is a fourth embodiment diagram of the shaft sealing device 50 of the marine contra-rotating propeller device 100 according to the present invention.

In this example, the lubricating oil supply device 28 has a lubricating oil tank 28a which holds the lubricating oil therein, a pump 28b which supplies the lubricating oil, a lubricating oil supply line 28c, and a stern tube bearing lubricating oil discharge line 28ds and a contra-rotating bearing lubricating oil discharge line 28dc pressurized with head pressure.

That is, in this example, the stern tube bearing lubricating oil and the contra-rotating bearing lubricating oil in the lubricating oil supply device 28 in the third embodiment are pressurized with back pressure (head pressure) instead of the pressurize air B. Further, the inboard-side seal (outer shaft seal member 8b) is branched from the lubricating oil supply system (lubricating oil supply line 28c) of the stern tube bearing 16 (and stern side contra-rotating bearing 18) and supplied with the lubricating oil.

With this configuration, the pressurized air B and the seal oil tank 22a can be omitted.

Incidentally, the present invention is not limited to the above-described embodiments, and it is needless to say that various modifications can be made within the scope not departing from the gist of the present invention. Reference Signs List

A seal pressurized air (seal air), B lubricating oil pressurized air (pressurized air), D1 front section drainage, D2 rear section drainage, Z-Z axial center, 1 front propeller, 2 rear propeller, 2a axial through hole, 3 stern, 4 drive shaft, 4a hollow hole, 5 bow side contra-rotating bearing, 6 thrust bearing, 7 bow side contra-rotating seal device, 8 bow-side stern tube seal device-cum-outer shaft oil distributing device (outer shaft oil distributor), 8a outer shaft annular chamber, 8b outer shaft seal member, 9 inner shaft oil distributor, 9a inner shaft annular chamber, 9b inner shaft seal member, 10 propeller cap, 12 outer propeller shaft, 12a flange, 14 inner propeller shaft, 14a hollow hole, 16 stern tube bearing, 18 stern side contra-rotating bearing, 20 reversing device, 22, 26 seal oil device, 22a, 26a seal oil tank, 28 lubricating oil supply device, 28a lubricating oil tank, 28b pump, 28c lubricating oil supply line, 28dc contra-rotating bearing lubricating oil discharge line, 28ds stern tube bearing lubricating oil discharge line, 30 flange cover, 32 adapter piping, 34 seal member, 50 shaft sealing device, 52 stern tube seal on the stern side, 52a front seal casing, 52b front seal liner, 52c front seal member, 52d front seal casing perforation, 53 front annular chamber, 53a front first chamber, 53b front second chamber, 53c front third chamber, 53d, 53e, 53f front standby seal chamber, 54 contra-rotating seal on the stern side, 54a rear seal casing, 54b rear seal liner, 54c rear seal member, 54d rear seal casing perforation, 55 rear annular chamber, 55a rear first chamber, 55b rear second chamber, 56 air supply device, 56a front air flow path, 56b rear air flow path, 57a, 57b B plug, 58 stern tube drainage recovery device, 60 contra-rotating drainage recovery device, 61 first drainage flow path, 62 second drainage flow path, 63 third drainage flow path, 64 inter-axis flow path, 65 first lubricating oil flow path, 66 second lubricating oil flow path, 67 third lubricating oil flow path, 68 fourth lubricating oil flow path, 69 fifth lubricating oil flow path, 100 marine contra-rotating propeller device.

## Claims

1. A marine contra-rotating propeller device (100) in which a front propeller (1) and a rear propeller (2) are disposed coaxially and respectively rotated in opposite directions each other,
wherein the marine contra-rotating propeller device (100) comprises a hollow outer propeller shaft (12) which is attached with the front propeller at a rear end portion thereof, and is rotatably supported by a stern tube bearing (16) about an axial center,
an inner propeller shaft (14) which is attached with the rear propeller at a rear end portion thereof, and is rotatably supported by a stern side contra-rotating bearing (18) about the axial center, and a shaft sealing device (50)
wherein the shaft sealing device (50) includes
a stern tube seal on the stern side (52) which prevents seawater from entering the stern tube bearing (16), and
a contra-rotating seal (54) on the stern side which prevents the seawater from entering the stern side contra-rotating bearing (18),
**characterized in that** the shaft sealing device (50) includes
a single air supply device (56) which supplies seal pressurized air to a front first chamber (53a) provided in the stern tube seal (52) and the contra-rotating seal (54) via the front first chamber (53a),
a stern tube drainage recovery device (58) which independently recovers a front section drainage (D1) discharged from the front first chamber (53a), and
a contra-rotating drainage recovery device (60) which recovers a rear section drainage (D2) discharged from the contra-rotating seal (54) via a front third chamber (53c) provided in the stern tube seal (52).

2. The marine contra-rotating propeller device (100) according to claim 1, wherein the stern tube seal (52) includes a front seal casing (52a) fixed to the stern tube bearing (16) or a stern (3) and having a circular opening centering around the axial center,
a front seal liner (52b) fixed to the front propeller and positioned inside the front seal casing, and
a plurality of front seal members (52c) which are positioned between the front seal casing and the front seal liner at intervals in an axial direction, and seal therebetween to form three or more front annular chambers (53) divided in the axial direction,
wherein the front annular chambers (53) include the front first chamber (53a), a front second chamber (53b), and the front third chamber (53c) from the side in contact with the seawater,
wherein the air supply device (53) includes a front air flow path (56a) which introduces the seal pressurized air into the front first chamber (53a),
wherein the stern tube drainage recovery device (58) includes a first drainage flow path (61) which discharges the front section drainage (D1) of the front first chamber (53a) into a ship,
wherein the contra-rotating drainage recovery device (60) includes a second drainage flow path (62) which discharges the rear section drainage (D2) of the front third chamber (53c) into the ship.

3. The marine contra-rotating propeller device (100) according to claim 2, wherein the contra-rotating seal (54) includes a rear seal casing (54a) fixed to the front propeller and having a circular opening centering around the axial center,
a rear seal liner (54b) fixed to the rear propeller and positioned inside the rear seal casing (54a), and
a plurality of rear seal members (54c) which are positioned between the rear seal casing (54a) and the rear seal liner (54b) at intervals in the axial direction, and seal therebetween to form two or more rear annular chambers (55) divided in the axial direction,
wherein the rear annular chambers (55) include a rear first chamber (55a) and a rear second chamber (55b) from the side in contact with the seawater,
wherein the air supply device (56) includes a rear air flow path (56b) which introduces the seal pressurized air from the front first chamber (53a) to the rear first chamber (55a),
wherein the contra-rotating drainage recovery device (60) includes a third drainage flow path (63) which discharges the rear section drainage (D2) of the rear first chamber (55a) into the front third chamber (53c).

4. The marine contra-rotating propeller device (100) according to claim 2, comprising a first lubricating oil flow path (65) which supplies lubricating oil to the stern tube bearing (16).

5. The marine contra-rotating propeller device (100) according to claim 2, comprising a second lubricating oil flow path (66) which discharges the lubricating oil from the front second chamber (53b) to the stern side of the stern tube bearing (16) through the front seal casing (52a).

6. The marine contra-rotating propeller device (100) according to claim 2, comprising an outer shaft oil distributor (8) which is fixed to the inside of the ship and supplies the lubricating oil to the outer propeller shaft (12) rotated thereinside,
wherein the outer shaft oil distributor (8) supplies the lubricating oil to an inter-axis flow path (64) between the outer propeller shaft (12) and the inner propeller shaft (14) and lubricates a bow side contra-rotating bearing (5), a thrust bearing (6) , and the stern side contra-rotating bearing (18).

7. The marine contra-rotating propeller device (100) according to claim 6, comprising an inner shaft oil distributor (9) which is fixed to the inside of the ship, discharges the lubricating oil from a hollow hole (14a) provided along the axial center of the inner propeller shaft (14) and a drive shaft (4) and returns the same to a lubricating oil tank (28a).

8. The marine contra-rotating propeller device (100) according to claim 6, comprising a third lubricating oil flow path (67) which discharges the lubricating oil from the inter-axis flow path of the stern side contra-rotating bearing (18) to the front second chamber (53b).

9. The marine contra-rotating propeller device (100) according to claim 3, wherein three the front seal members (52c) are provided as standby seals in the middle and on both sides in the axial direction, of the front second chamber (53b) and the front third chamber (53c),
wherein three front standby seal chambers are formed in the middle and on both sides, and
wherein the shaft sealing device (50) includes a fourth lubricating oil flow path (68) which supplies the lubricating oil from the inside of the ship to the three front standby seal chambers.

10. The marine contra-rotating propeller device (100) according to claim 9, comprising a fifth lubricating oil flow path (69) which communicates the rear second chamber (55b) and the front standby seal chamber with each other.

11. The marine contra-rotating propeller device (100) according to claim 1, wherein a portion in contact with the seal pressurized air and the front section drainage (D1) or the rear section drainage (D2) is made of a material corrosion-resistant to the seawater.

12. The marine contra-rotating propeller device (100) according to claim 2, comprising a front seal casing perforation (52d) which communicates the lubricating oil of the stern tube bearing (16) and the front second chamber (53b) with each other, and
a B plug (57a) which blocks the communication by the front seal casing perforation (52d).

13. The marine contra-rotating propeller device (100) according to claim 3, comprising a rear seal casing perforation (54d) which communicates the lubricating oil of the stern side contra-rotating bearing (18) and the rear second chamber (55b) with each other, and
a B plug (57b) which blocks the communication by the rear seal casing perforation.

14. The marine contra-rotating propeller device (100) according to claim 1, comprising a lubricating oil supply device (28) which supplies the lubricating oil to the stern tube bearing (16) and the stern side contra-rotating bearing (18),
wherein the lubricating oil supply device (28) includes a lubricating oil tank (28a) which holds the lubricating oil therein, a pump (28b) which supplies the lubricating oil, a lubricating oil supply line (28c), and a stern tube bearing lubricating oil discharge line (28ds) and a contra-rotating bearing lubricating oil discharge line (28dc) pressurized with head pressure.

## Patentansprüche

1. Gegenläufige Schiffspropellervorrichtung (100), bei der ein vorderer Propeller (1) und ein hinterer Propeller (2) koaxial angeordnet sind und sich jeweils in entgegengesetzten Richtungen zueinander drehen,
wobei die gegenläufige Schiffspropellervorrichtung (100) eine hohle äußere Propellerwelle (12) umfasst, die mit dem vorderen Propeller an einem hinteren Endabschnitt davon befestigt ist und durch ein Stevenrohrlager (16) um eine axiale Mitte drehbar gelagert ist,
eine innere Propellerwelle (14), die mit dem hinteren Propeller an einem hinteren Endabschnitt davon befestigt ist und durch ein heckseitiges gegenläufiges Lager (18) um die axiale Mitte drehbar gelagert ist, und eine Wellenabdichtungsvorrichtung (50)
wobei die Wellenabdichtungsvorrichtung (50) enthält
eine Stevenrohrdichtung auf der Heckseite (52), die verhindert, dass Seewasser in das Stevenrohrlager (16) eindringt, und
eine heckseitige gegenläufige Dichtung (54), die verhindert, dass Seewasser in das heckseitige gegenläufige Lager (18) eindringt,
**dadurch gekennzeichnet, dass** die Wellenabdichtungsvorrichtung (50) enthält
eine einzelne Luftzufuhrvorrichtung (56), die einer vorderen ersten Kammer (53a), die in der Stevenrohrdichtung (52) vorgesehen ist, und der gegenläufigen Dichtung (54) über die vordere erste Kammer (53a) Dichtungsdruckluft zuführt,
eine Stevenrohr-Drainagerückgewinnungsvorrichtung (58), die unabhängig eine Drainage (D1) des vorderen Abschnitts zurückgewinnt, die von der vorderen ersten Kammer (53a) abgegeben wird, und
eine gegenläufige Drainagerückgewinnungsvorrichtung (60), die eine Drainage (D2) des hinteren Abschnitts zurückgewinnt, die von der gegenläufigen Dichtung (54) über eine in der Stevenrohrdichtung (52) vorgesehene vordere dritte Kammer (53c) abgegeben wird.

2. Gegenläufige Schiffspropellervorrichtung (100) nach Anspruch 1, wobei die Stevenrohrdichtung (52) ein vorderes Dichtungsgehäuse (52a) enthält, das an dem Stevenrohrlager (16) oder einem Heck (3) befestigt ist und eine kreisförmige Öffnungszentrierung um die axiale Mitte aufweist,
eine vordere Dichtungsauskleidung (52b), die an dem vorderen Propeller befestigt und innerhalb des vorderen Dichtungsgehäuses positioniert ist, und
eine Vielzahl von vorderen Dichtungselementen (52c), die zwischen dem vorderen Dichtungsgehäuse und der vorderen Dichtungsauskleidung in Abständen in axialer Richtung positioniert sind und dazwischen abdichten, um drei oder mehr vordere ringförmige Kammern (53) zu bilden, die in axialer Richtung unterteilt sind,
wobei die vorderen ringförmigen Kammern (53) die vordere erste Kammer (53a), eine vordere zweite Kammer (53b) und die vordere dritte Kammer (53c) von der Seite in Kontakt mit dem Meerwasser enthalten,
wobei die Luftzufuhrvorrichtung (53) einen vorderen Luftströmungsweg (56a) enthält, der die Dichtungsdruckluft in die vordere erste Kammer (53a) einführt,
wobei die Stevenrohr-Drainagerückgewinnungsvorrichtung (58) einen ersten Drainageströmungsweg (61) enthält, der die Drainage (D1) des vorderen Abschnitts der vorderen ersten Kammer (53a) in ein Schiff abgibt,
wobei die gegenläufige Drainagerückgewinnungsvorrichtung (60) einen zweiten Drainageströmungsweg (62) enthält, der die Drainage (D2) des hinteren Abschnitts der vorderen dritten Kammer (53c) in das Schiff abgibt.

3. Gegenläufige Schiffspropellervorrichtung (100) nach Anspruch 2, wobei die gegenläufige Dichtung (54) ein hinteres Dichtungsgehäuse (54a) enthält, das an dem vorderen Propeller befestigt ist und eine kreisförmige Öffnung aufweist, die um die axiale Mitte zentriert ist,
eine hintere Dichtungsauskleidung (54b), die an dem hinteren Propeller befestigt und innerhalb des hinteren Dichtungsgehäuses (54a) positioniert ist, und
eine Vielzahl von hinteren Dichtungselementen (54c), die zwischen dem hinteren Dichtungsgehäuse (54a) und der hinteren Dichtungsauskleidung (54b) in Abständen in axialer Richtung positioniert sind und dazwischen abdichten, um zwei oder mehr hintere ringförmige Kammern (55) zu bilden, die in axialer Richtung unterteilt sind,
wobei die hinteren ringförmigen Kammern (55) eine hintere erste Kammer (55a) und eine hintere zweite Kammer (55b) von der Seite in Kontakt mit dem Meerwasser enthalten,
wobei die Luftzufuhrvorrichtung (56) einen hinteren Luftströmungsweg (56b) enthält, der die Dichtungsdruckluft von der vorderen ersten Kammer (53a) in die hintere erste Kammer (55a) einführt,
wobei die gegenläufige Drainagerückgewinnungsvorrichtung (60) einen dritten Drainageströmungsweg (63) enthält, der die Drainage (D2) des hinteren Abschnitts der hinteren ersten Kammer (55a) in die vordere dritte Kammer (53c) abgibt.

4. Gegenläufige Schiffspropellervorrichtung (100) nach Anspruch 2, umfassend einen ersten Schmieröl-Strömungsweg (65), der dem Stevenrohrlager (16) Schmieröl zuführt.

5. Gegenläufige Schiffspropellervorrichtung (100) nach Anspruch 2, umfassend einen zweiten Schmieröl-Strömungsweg (66), der das Schmieröl von der vorderen zweiten Kammer (53b) zu der Heckseite des Stevenrohrlagers (16) durch das vordere Dichtungsgehäuse (52a) abgibt.

6. Gegenläufige Schiffspropellervorrichtung (100) nach Anspruch 2, umfassend einen Außenwellen-Ölverteiler (8), der an der Innenseite des Schiffs befestigt ist und das Schmieröl der sich darin drehenden äußeren Propellerwelle (12) zuführt,
wobei der Außenwellen-Ölverteiler (8) das Schmieröl einem Zwischenachs-Strömungsweg (64) zwischen der äußeren Propellerwelle (12) und der inneren Propellerwelle (14) zuführt und ein bugseitiges gegenläufiges Lager (5), ein Drucklager (6) und das heckseitige gegenläufige Lager (18) schmiert.

7. Gegenläufige Schiffspropellervorrichtung (100) nach Anspruch 6, umfassend einen Innenwellen-Ölverteiler (9), der an der Innenseite des Schiffs befestigt ist, das Schmieröl aus einem hohlen Loch (14a) abgibt, das entlang der axialen Mitte der inneren Propellerwelle (14) und einer Antriebswelle (4) vorgesehen ist, und dieses zu einem Schmieröltank (28a) zurückführt.

8. Gegenläufige Schiffspropellervorrichtung (100) nach Anspruch 6, umfassend einen dritten Schmieröl-Strömungsweg (67), der das Schmieröl von dem Zwischenachs-Strömungsweg des heckseitigen gegenläufigen Lagers (18) zu der vorderen zweiten Kammer (53b) abgibt.

9. Gegenläufige Schiffspropellervorrichtung (100) nach Anspruch 3, wobei drei vordere Dichtungselemente (52c) als Bereitschaftsdichtungen, in der Mitte und auf beiden Seiten in axialer Richtung, der vorderen zweiten Kammer (53b) und der vorderen dritten Kammer (53c), vorgesehen sind,
wobei drei vordere Bereitschaftsdichtungskammern in der Mitte und auf beiden Seiten ausgebildet sind, und
wobei die Wellenabdichtungsvorrichtung (50) einen vierten Schmieröl-Strömungsweg (68) enthält, der das Schmieröl von der Innenseite des Schiffs den drei vorderen Bereitschaftsdichtungskammern zuführt.

10. Gegenläufige Schiffspropellervorrichtung (100) nach Anspruch 9, umfassend einen fünften Schmieröl-Strömungsweg (69), der die hintere zweite Kammer (55b) und die vordere Bereitschaftsdichtungskammer miteinander verbindet.

11. Gegenläufige Schiffspropellervorrichtung (100) nach Anspruch 1, wobei ein Abschnitt in Kontakt mit der Dichtungsdruckluft und der Drainage (D1) des vorderen Abschnitts oder der Drainage (D2) des hinteren Abschnitts aus einem gegenüber Meerwasser korrosionsbeständigen Material hergestellt ist.

12. Gegenläufige Schiffspropellervorrichtung (100) nach Anspruch 2, umfassend eine Perforation (52d) des vorderen Dichtungsgehäuses, die das Schmieröl des Stevenrohrlagers (16) und der vorderen zweiten Kammer (53b) miteinander verbindet, und
einen B-Stopfen (57a), der die Verbindung durch die Perforation (52d) des vorderen Dichtungsgehäuses blockiert.

13. Gegenläufige Schiffspropellervorrichtung (100) nach Anspruch 3, umfassend eine Perforation (54d) des hinteren Dichtungsgehäuses, die das Schmieröl des heckseitigen gegenläufigen Lagers (18) und der hinteren zweiten Kammer (55b) miteinander verbindet, und
einen B-Stopfen (57b), der die Verbindung durch die Perforation des hinteren Dichtungsgehäuses blockiert.

14. Gegenläufige Schiffspropellervorrichtung (100) nach Anspruch 1, umfassend eine Schmierölzufuhrvorrichtung (28), die das Schmieröl dem Stevenrohrlager (16) und dem heckseitigen gegenläufigen Lager (18) zuführt,
wobei die Schmierölzufuhrvorrichtung (28) einen Schmieröltank (28a), der das Schmieröl darin enthält, eine Pumpe (28b), die das Schmieröl zuführt, eine Schmierölzufuhrleitung (28c) und eine Stevenrohrlager-Schmierölablassleitung (28ds) und eine Schmierölablassleitung (28dc) für ein gegenläufiges Lager enthält, die mit Kopfdruck unter Druck gesetzt wird.

## Revendications

1. Dispositif d'hélice à contre-rotation marin (100) dans lequel une hélice avant (1) et une hélice arrière (2) sont disposées coaxialement et tournent respectivement dans des sens opposés l'une par rapport à l'autre,
le dispositif d'hélice à contre-rotation marin (100) comprenant un arbre d'hélice externe creux (12) qui est fixé à l'hélice avant au niveau d'une partie d'extrémité arrière correspondante et qui est supporté de manière rotative par un palier de tube d'étambot (16) autour d'un centre axial,
un arbre d'hélice interne (14) qui est fixé à l'hélice arrière au niveau d'une partie d'extrémité arrière correspondante et qui est supporté de manière rotative par un palier de contre-rotation (18) côté poupe autour du centre axial, et un dispositif d'étanchéité d'arbre (50)
le dispositif d'étanchéité d'arbre (50) comprenant
un joint de tube d'étambot sur le côté poupe (52) qui empêche l'eau de mer de pénétrer dans le palier de tube d'étambot (16) et
un joint de contre-rotation (54) côté poupe qui empêche l'eau de mer de pénétrer dans le palier de contre-rotation (18) côté poupe,
**caractérisé en ce que** le dispositif d'étanchéité d'arbre (50) comprend
un dispositif d'alimentation en air unique (56) qui fournit de l'air sous pression d'étanchéité à une première chambre avant (53a) prévue dans le joint de tube d'étambot (52) et le joint de contre-rotation (54) via la première chambre avant (53a),
un dispositif de récupération de drainage de tube d'étambot (58) qui récupère indépendamment un drainage de section avant (D1) évacué de la première chambre avant (53a) et
un dispositif de récupération de drainage en contre-rotation (60) qui récupère un drainage de section arrière (D2) évacué du joint à contre-rotation (54) via une troisième chambre avant (53c) prévue dans le joint de tube d'étambot (52).

2. Dispositif d'hélice à contre-rotation marin (100) selon la revendication 1, dans lequel le joint de tube d'étambot (52) comprend un boîtier de joint avant (52a) fixé au palier de tube d'étambot (16) ou à une poupe (3) et ayant une ouverture circulaire centrée autour du centre axial,
une garniture de joint avant (52b) fixée à l'hélice avant et positionnée à l'intérieur du boîtier de joint avant et
une pluralité d'éléments de joint avant (52c) qui sont positionnés à intervalles entre le boîtier de joint avant et la garniture de joint avant dans un sens axial et réalisent un joint entre eux pour former au moins trois chambres annulaires avant (53) divisées dans le sens axial,
les chambres annulaires avant (53) comprenant la première chambre avant (53a), une deuxième chambre avant (53b) et la troisième chambre avant (53c) depuis le côté en contact avec l'eau de mer,
le dispositif d'alimentation en air (56) comprenant un trajet d'écoulement d'air avant (56a) qui introduit l'air sous pression d'étanchéité dans la première chambre avant (53a),
le dispositif de récupération de drainage de tube d'étambot (58) comprenant un premier trajet d'écoulement de drainage (61) qui évacue le drainage de section avant (D1) de la première chambre avant (53a) jusque dans un navire,
le dispositif de récupération de drainage en contre-rotation (60) comprenant un deuxième trajet d'écoulement de drainage (62) qui évacue le drainage de section arrière (D2) de la troisième chambre avant (53c) jusque dans le navire.

3. Dispositif d'hélice à contre-rotation marin (100) selon la revendication 2, dans lequel le joint de contre-rotation (54) comprend un boîtier de joint arrière (54a) fixé à l'hélice avant et ayant une ouverture circulaire centrée autour du centre axial,
une garniture de joint arrière (54b) fixée à l'hélice arrière et positionnée à l'intérieur du boîtier de joint arrière (54a) et
une pluralité d'éléments de joint arrière (54c) qui sont positionnés à intervalles entre le boîtier de joint arrière (54a) et la garniture de joint arrière (54b) dans le sens axial et qui réalisent un joint entre eux pour former au moins deux chambres annulaires arrière (55) divisées dans le sens axial,
les chambres annulaires arrière (55) comprenant une première chambre arrière (55a) et une seconde chambre arrière (55b) depuis le côté en contact avec l'eau de mer,
le dispositif d'alimentation en air (56) comprenant un trajet d'écoulement d'air arrière (56b) qui introduit l'air sous pression d'étanchéité, de la première chambre avant (53a) vers la première chambre arrière (55a),
le dispositif de récupération de drainage en contre-rotation (60) comprenant un troisième trajet d'écoulement de drainage (63) qui évacue le drainage de section arrière (D2) de la première chambre arrière (55a) dans la troisième chambre avant (53c).

4. Dispositif d'hélice à contre-rotation marin (100) selon la revendication 2, comprenant un premier trajet d'écoulement d'huile de lubrification (65) qui fournit de l'huile de lubrification au palier de tube d'étambot (16).

5. Dispositif d'hélice à contre-rotation marin (100) selon la revendication 2, comprenant un deuxième trajet d'écoulement d'huile de lubrification (66) qui évacue l'huile de lubrification de la deuxième chambre avant (53b) vers le côté poupe du palier de tube d'étambot (16) à travers le boîtier de joint avant (52a).

6. Dispositif d'hélice à contre-rotation marin (100) selon la revendication 2, comprenant un distributeur d'huile d'arbre externe (8) qui est fixé à l'intérieur du navire et qui fournit l'huile de lubrification à l'arbre d'hélice externe (12) entraîné en rotation à l'intérieur,
le distributeur d'huile d'arbre externe (8) fournit l'huile de lubrification à un trajet d'écoulement inter-axe (64) entre l'arbre d'hélice externe (12) et l'arbre d'hélice interne (14) et lubrifie un palier de contre-rotation (5) côté proue, un palier de butée (6) et le palier de contre-rotation (18) côté poupe.

7. Dispositif d'hélice à contre-rotation marin (100) selon la revendication 6, comprenant un distributeur d'huile d'arbre interne (9) qui est fixé à l'intérieur du navire, évacue l'huile de lubrification à partir d'un trou creux (14a) prévu le long du centre axial de l'arbre d'hélice interne (14) et d'un arbre d'entraînement (4) et la renvoie vers un réservoir d'huile de lubrification (28a).

8. Dispositif d'hélice à contre-rotation marin (100) selon la revendication 6, comprenant un troisième trajet d'écoulement d'huile de lubrification (67) qui évacue l'huile de lubrification du trajet d'écoulement inter-axe du palier de contre-rotation (18) côté poupe vers la deuxième chambre avant (53b).

9. Dispositif d'hélice à contre-rotation marin (100) selon la revendication 3, dans lequel trois des éléments de joint avant (52c) sont prévus en tant que joints en stand-by au milieu et sur les deux côtés dans le sens axial de la deuxième chambre avant (53b) et de la troisième chambre avant (53c),
trois chambres de joint en stand-by avant sont formées au milieu et sur les deux côtés et
le dispositif d'étanchéité d'arbre (50) comprend un quatrième trajet d'écoulement d'huile de lubrification (68) qui fournit l'huile de lubrification, depuis l'intérieur du navire jusqu'aux trois chambres de joint en stand-by avant.

10. Dispositif d'hélice à contre-rotation marin (100) selon la revendication 9, comprenant un cinquième trajet d'écoulement d'huile de lubrification (69) qui fait communiquer l'une avec l'autre la seconde chambre arrière (55b) et la chambre de joint en stand-by avant.

11. Dispositif d'hélice à contre-rotation marin (100) selon la revendication 1, dans lequel une partie en contact avec l'air sous pression d'étanchéité et le drainage de section avant (D1) ou le drainage de section arrière (D2) est réalisée dans un matériau résistant à la corrosion de l'eau de mer.

12. Dispositif d'hélice à contre-rotation marin (100) selon la revendication 2, comprenant une perforation de boîtier de joint avant (52d) qui fait communiquer l'une avec l'autre l'huile de lubrification du palier de tube d'étambot (16) et la deuxième chambre avant (53b) et
un bouchon B (57a) qui bloque la communication par la perforation de boîtier de joint avant (52d).

13. Dispositif d'hélice à contre-rotation marin (100) selon la revendication 3, comprenant une perforation de boîtier de joint arrière (54d) qui fait communiquer l'une avec l'autre l'huile de lubrification du palier de contre-rotation (18) côté poupe et la seconde chambre avant (55b) et
un bouchon B (57b) qui bloque la communication par la perforation de boîtier de joint arrière.

14. Dispositif d'hélice à contre-rotation marin (100) selon la revendication 1, comprenant un dispositif d'alimentation en huile de lubrification (28) qui fournit l'huile de lubrification au palier de tube d'étambot (16) et au palier de contre-rotation (18) côté poupe,
le dispositif d'alimentation en huile de lubrification (28) comprenant un réservoir d'huile de lubrification (28a) qui contient l'huile de lubrification en son sein, une pompe (28b) qui fournit l'huile de lubrification, une conduite d'alimentation en huile de lubrification (28c) et une conduite d'évacuation (28ds) d'huile de lubrification de palier de tube d'étambot et une conduite d'évacuation (28dc) d'huile de lubrification de palier de contre-rotation mises sous pression avec une pression de refoulement.
